(19) Europäisches Patentamt
European Patent Office
Office européen des brevets

(11) EP 0 960 967 B1

(12) EUROPEAN PATENT SPECIFICATION

(45) Date of publication and mention of the grant of the patent:
**20.08.2003 Bulletin 2003/34**

(51) Int Cl.7: **D04H 1/42**, D01F 6/76, C08G 75/02, B01D 39/16, D04H 1/56

(21) Application number: **99304123.5**

(22) Date of filing: **27.05.1999**

(54) **Melt-blown, non-woven fabric of polyarylene sulfide and method for producing same**

Meltblown-Vlies aus Polyarylensulfid und Verfahren zu dessen Herstellung

Tissu non tissé fondu soufflé à base de polysulfure d'arylène et méthode de fabrication

(84) Designated Contracting States:
**DE FR GB**

(30) Priority: **27.05.1998 JP 14592198**

(43) Date of publication of application:
**01.12.1999 Bulletin 1999/48**

(73) Proprietor: **DAINIPPON INK AND CHEMICALS, INC.**
**Itabashi-ku, Tokyo 174-8520 (JP)**

(72) Inventors:
- **Yamanaka, Hidenori**
  **Ichihara-shi, Chiba-ken (JP)**
- **Fujii, Shigeo**
  **Kawagoe-shi, Saitama-ken (JP)**
- **Mikami, Takashi**
  **Suginami-ku, Tokyo (JP)**
- **Komiyama, Osamu**
  **Ichihara-shi, Chiba-ken (JP)**
- **Kawazoe, Mitsuru**
  **Sagamihara-shi, Kanagawa-ken (JP)**

(74) Representative: **Calamita, Roberto et al**
**Frank B. Dehn & Co.,**
**European Patent Attorneys,**
**179 Queen Victoria Street**
**London EC4V 4EL (GB)**

(56) References cited:
**EP-A- 0 280 385**
**EP-A- 0 316 195**
**EP-A- 0 353 717**
**EP-A- 0 709 499**
**US-A- 4 454 189**
**US-A- 4 645 825**
**US-A- 5 690 873**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

The present invention relates to a melt-blown, non-woven fabric constituted by extremely fine polyarylene sulfide fibers excellent in heat resistance, chemical resistance, flame retardance, mechanical properties, etc. and a method for producing it.

In the recent development of electronics technology, batteries and capacitors have come to be widely used not only in electric apparatus such as memory-backup power sources, etc., but also in engine compartments of cars, various industrial equipment, etc. In addition, such equipment has come to be often used at high temperatures and humidity. Therefore, research has been carried out into increasing the heat resistance of battery components such as battery cases, gaskets, battery separators, etc. so that they can be used in such harsh conditions.

In particular, because the extent to which batteries can be miniaturized largely depends on the thickness of battery separators, thin battery separators with a good mechanical strength and excellent heat resistance and chemical resistance have been required. Polypropylene has conventionally been used widely as a resin that satisfies such requirements. The non-woven fabrics are produced by various methods such as a dry method, a wet method, a spun-bounding method and a melt-blowing method. Among them, the melt-blowing method has been often used to produce the non-woven fabrics for battery separators, since the melt-blown, non-woven fabrics are constituted by extremely fine fibers. However, the non-woven polypropylene fabrics are disadvantageous in that they are insufficient in heat resistance, chemical resistance, flame retardance, etc. depending on their applications. Additionally, the non-woven polypropylene fabrics are likely to be insufficient in holding an electrolyte solution, because the battery separators have recently been made thin as the capacity of the batteries increases.

To obviate such problems of the conventional non-woven fabrics, proposals have been made to provide non-woven fabrics of polyarylene sulfide (PAS) having a high melting point and excellent heat resistance, chemical resistance and flame retardance. For example, Japanese Patent Laid-Open No. 63-315655 discloses a melt-blown, non-woven fabric of polyphenylene sulfide having a basis weight variable within 7% and constituted by polyphenylene sulfide fibers having an average diameter of 0.5 denier or less and at least partially fused or entangled to each other, which is produced from polyphenylene sulfide having a weight average molecular weight of 20,000-70,000. However, this non-woven fabric is disadvantageous in having a larger average fiber diameter, because the polyarylene sulfide having a weight average molecular weight of 20,000 or more is used to provide the non-woven fabric with sufficient strength.

Disclosed as a non-woven fabric constituted by extremely fine fibers by Japanese Patent Laid-Open No. 1-229855 is a non-woven fabric constituted by fibers made of substantially linear polyphenylene sulfide and having a fiber diameter of 0.1-8.0 μm. In general, the melt viscosity of the resin should be lowered by raising a die temperature to obtain extremely fine fibers by the melt-blowing method. However, the resins tend to be subjected to oxidative degradation, increase in viscosity by cross-linking and accumulation of decomposed polymers at high temperatures, resulting in unevenness in resin flow and die clogging. As a result of research, the inventors have found that when substantially linear PAS as described in Japanese Patent Laid-Open No. 1-229855 and non-linear PAS both having the same weight average molecular weight are compared, the substantially linear PAS is more likely to be melted unevenly in the die and tends to provide fibers with less uniform diameters, failing to produce non-woven fabrics stably, because the substantially linear PAS clogs the die more often over a long period of time than the non-linear PAS.

Accordingly, an object of the present invention is to provide a melt-blown, non-woven fabric constituted by extremely fine polyarylene sulfide fibers and a method for producing it stably.

As a result of intense research in view of the above object, the inventors have found that a melt-blown, non-woven fabric constituted by extremely fine polyarylene sulfide fibers can be produced from a substantially non-linear polyarylene sulfide having a non-Newtonian coefficient in a particular range. The present invention has been completed based upon this finding.

Thus, the melt-blown, non-woven fabric of the present invention is produced from a composition comprising polyarylene sulfide having a branched structure and a non-Newtonian coefficient of 1.05-1.20.

The method for producing a melt-blown, non-woven fabric according to the present invention comprises the steps of:

(a) melt-kneading polyarylene sulfide having a non-Newtonian coefficient of 1.05-1.20;
(b) extruding the melt-kneaded polyarylene sulfide through nozzles at 300-360°C and drawing the polyarylene sulfide extrudate with a hot gas stream at 300-360°C to form extremely fine fibers having an average fiber diameter of 10 μm or less; and
(c) depositing the resultant extremely fine fibers on a collector,

wherein said polyarylene sulfide is synthesized by a reaction of an alkaline metal sulfide, a dihaloaromatic compound and a polyhaloaromatic compound having 3 or more halogen substituents in one molecule, and wherein 0.01-0.3 mol

%, based on 100 mol % of said alkaline metal sulfide, of said polyhaloaromatic compound is added in said reaction.

BRIEF DESCRIPTION OF THE DRAWINGS

Fig. 1 is a schematic view showing a screw kneading-type heating apparatus for producing branched polyarylene sulfide by a thermal oxidation cross-linking treatment;
Fig. 2 is a schematic view showing an example of apparatus for producing the melt-blown, non-woven fabric of the present invention from polyarylene sulfide; and
Fig. 3 is a longitudinal cross-sectional view showing a die of the apparatus shown in Fig. 2.

The present invention will be described in detail below.

[1] Starting material for melt-blown, non-woven fabric

(A) Polyarylene sulfide (PAS)

PAS used in the present invention may be a homopolymer or a copolymer mainly composed of an arylene sulfide repeating unit represented by the following general formula:

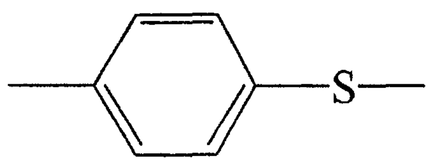
,

the above arylene sulfide repeating unit being 70 mol % or more, preferably 90 mol % or more, based on all the repeating units in the PAS.
The above arylene sulfide repeating unit may be substituted in a range within 30 mol % by at least one repeating unit selected from the group consisting of those represented by the following formulae (i)-(v):

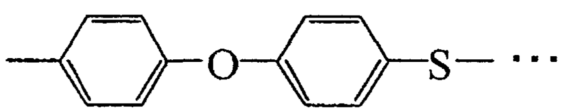
(i) ,

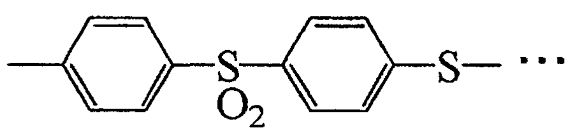
(ii) ,

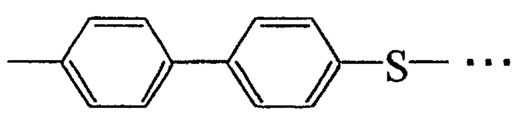
(iii) ,

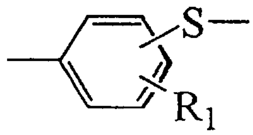 ··· (iv) ,

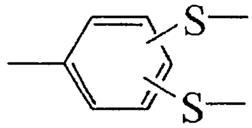 ··· (v)

wherein $R_1$ represents an alkyl group, a nitro group, a phenyl group or an alkoxyl group.

The PAS used in the present invention is substantially non-linear (branched) polymer. The non-linearity (degree of branching) of PAS may be represented by a non-Newtonian coefficient (N). The PAS used in the present invention should have a non-Newtonian coefficient of 1.05-1.20. The non-Newtonian coefficient (N) is an exponent term in the following equation (1):

$$\ln(SR) = \ln(K) + N \cdot \ln(SS) \qquad (1),$$

wherein, SR represents a shear rate [1/s], SS represents a shear stress [dyn/cm$^2$] and K is a constant. The PAS nears a linear polymer as the non-Newtonian coefficient (N) nears 1, and the larger the non-Newtonian coefficient (N), the higher the percentage of branched or cross-linked structure in the PAS.

The substantially non-linear PAS can be produced by a method for introducing the branched structure or a cross-linking method.

(1) Method for introducing branched structure

A mixture of an alkaline metal sulfide and a dihaloaromatic compound can be subjected to a polymerization reaction together with a polyhaloaromatic compound having three or more halogen substituents to introduce the branched structure to PAS.

Alkaline metal sulfides may be lithium sulfide, sodium sulfide, potassium sulfide, rubidium sulfide, cesium sulfide, etc. Also usable as the alkaline metal sulfides are alkaline metal hydrosulfides corresponding to the alkaline metal sulfides and alkaline metal hydrates neutralized by alkaline metal hydroxides. Among them, sodium sulfide is preferable because of inexpensiveness.

The dihaloaromatic compounds may be represented by the following general formula:

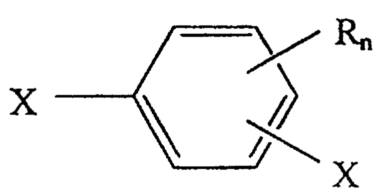

wherein X represents a halogen atom, R represents an alkyl or alkoxyl group having 1-3 carbon atoms, and *n* represents an integer of 0-3.

Preferred dihaloaromatic compounds may be, for example, dihalobenzenes represented by following formulae (vi) and (vii):

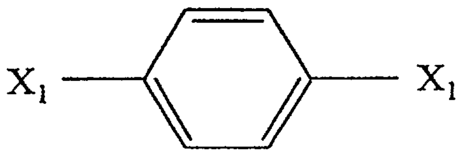

··· (vi) ,

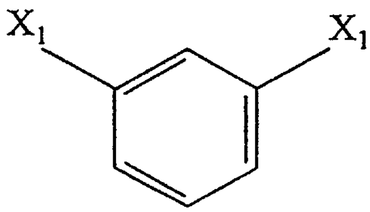

··· (vii)

wherein $X_1$ represents a halogen atom, or mixtures thereof. Among them, *p*-dichlorobenzene (vi) is particularly preferable. When a mixture of dihaloaromatic compounds is used, the *p*-isomer is preferably 85 mol % or more.

The polyhaloaromatic compounds having 3 or more halogen substituents may be 1,2,3-trichlorobenzene, 1,2,4-trichlorobenzene, 1,3,5-trichlorobenzene, 1,3-dichloro-5-bromobenzene, 2,4,6-trichlorobenzene, 1,2,3,5 -tetrabromobenzene, hexachlorobenzene, 1,3,5-trichloro-2,4,6-trimethylbenzene, 2,2',4,4'-tetrachlorobiphenyl, 2,2',6,6'-tetrabromo-3,3',5,5'-tetramethylbiphenyl, 1,2,3,4-tetrachloronaphthalene, 1,2,4-tribromo-6-methylnaphthalene, etc. and mixtures thereof. Among them, 1,2,4-trichlorobenzene and 1,3,5-trichlorobenzene are preferable.

The degree of branching of PAS may be controlled by adjusting the amount of the polyhaloaromatic compound added. The amount of the polyhaloaromatic compound is preferably 0.001-0.6 mol %, more preferably 0.01-0.3 mol %, based on 100 mol % of the alkaline metal sulfide (sulfur atom). The PAS prepared with 0.001-0.6 mol % of the polyhaloaromatic compound has a non-Newtonian coefficient of 1.05-1.20.

The polymerization reaction is carried out in a polar solvent. The preferred polar solvent is an amide solvent such as *N*-methyl-2-pyrroridone (NMP), dimethylacetamide, etc. or a sulfone solvent such as sulforane, etc. An alkaline metal salt of carboxylic acid, sulfonic acid, etc., alkaline hydroxide, etc. may preferably be added to control the degree of polymerization of PAS.

The polymerization reaction is preferably carried out at 180-300°C for 2-10 hours in an inert gas atmosphere. After the polymerization reaction, the reaction mixture is filtered, and the resultant polymer is sufficiently washed with de-ionized warm water and dried to provide a branched PAS.

Methods of adding the polyhaloaromatic compound to the reaction mixture are not restrictive. For example, the polyhaloaromatic compound may be added simultaneously with the alkaline metal sulfide and the dihaloaromatic compound. The polyhaloaromatic compound may also be introduced in the form of a solution in an organic solvent such as NMP into the reactor under pressure with a high-pressure pump at an optional stage.

The PAS obtained by adding the polyhaloaromatic compound is a substantially non-linear polymer, because it comprises 0.001-0.6 mol %, based on 100 mol % of repeating units each containing one sulfur atom, of branched repeating units containing two or more sulfur atoms. The branched repeating unit is exemplified by the following formulae (viii) and (ix):

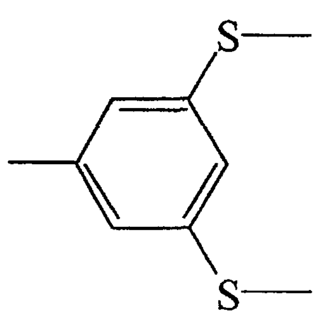

··· (viii) ,

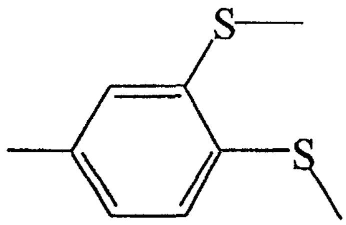

··· (ix)

(2) Cross-linking method

PAS produced by a reaction of the alkaline metal sulfide and the dihaloaromatic compound is cross-linked by a thermal oxidation cross-linking treatment before melt-kneading.

The alkaline metal sulfide, the dihaloaromatic compound and their polymerization method may be the same as those explained in the previous column entitled "(1) Method for introducing branched structure." The thermal oxidation cross-linking treatment may be conducted after the polyhaloaromatic compound is added.

The thermal oxidation cross-linking treatment is carried out in an oxygen-containing atmosphere such as the air, a mixed gas of oxygen and an inert gas (argon, carbon dioxide, etc.), etc. In the case of the mixed gas, the oxygen content is preferably 0.5-50 volume %, more preferably 10-25 volume %. When the oxygen content exceeds 50 volume %, too much radical is formed, making the polymer have extremely high melt viscosity and darker color. On the other hand, when the oxygen content is less than 0.5 volume %, the thermal oxidation cross-linking takes place very slowly.

The thermal oxidation cross-linking temperature is preferably 160-260°C, more preferably 180-230°C. When it is lower than 160°C, the thermal oxidation cross-linking takes too long period of time, making the entire process economically disadvantageous. On the other hand, when it exceeds 260°C, the PAS is likely to decompose. The thermal oxidation cross-linking time is preferably 1-120 hours, more preferably 3-100 hours. The degree of cross-linking can preferably be controlled by adjusting the thermal oxidation cross-linking time.

The apparatus for the thermal oxidation cross-linking treatment is not restricted to any particular one, and any known apparatus may be used in the present invention. Exemplified as apparatus and methods for the thermal oxidation cross-linking treatment are a method using an apparatus for drying with forced circulation of hot air (U. S. Patent 3,354,129), a heating and mixing apparatus with a fixed container equipped with double spiral agitating blades (U.S. Patent 3,717,620), a method using fluidized bed (U. S. Patent 3,793,256), a method using a jacketed fluidized-bed reactor containing an agitator (Japanese Patent Publication No. 62-177027), and a method using a screw kneading-type heating apparatus or a highspeed blade mixing-type heating apparatus (Japanese Patent Laid-Open No. 7-242746), etc.

Additionally preferable for the thermal oxidation cross-linking treatment of the PAS is a screw kneading-type, heating apparatus 1 shown in Fig. 1. The screw kneading-type heating apparatus 1 has an inverted cone-shaped bath 10 enclosed by a heating jacket 11 and containing a screw 12. The heating jacket 11 is connected to a heating medium-circulating system 11a.

The inverted cone-shaped bath 10 has an upper cover 10a provided with an inlet 13 for PAS and a driving motor 14. A link 15 fixed to a shaft 14a of the driving motor 14 has a tip end rotatably connected to an upper end of the screw 12. A lower end of the screw 12 is rotatably connected via a universal joint to a shaft 10b fixed to a bottom of the inverted cone-shaped bath 10. Thus, the screw 12 is rotated by the driving motor 14 along a conical orbit as shown by the arrow in Fig. 1 on an inner wall of the inverted cone-shaped bath 10.

The screw kneading-type heating apparatus 1 has a line 16 for introducing an oxygen-containing gas and a gas exit (bag filter) 17 to keep flowing oxygen necessary for the thermal oxidation cross-linking treatment. The screw kneading-type heating apparatus 1 is equipped with a thermometer 18, such that the temperature in the bath 10 may be set at any desired level. The PAS subjected to thermal oxidation cross-linking is taken out of the bath 10 through a product exit 19.

(B) Properties of PAS

The PAS thus obtained has a non-Newtonian coefficient of 1.05-1.20 as described above.

Additives such as a heat stabilizer, a light stabilizer, a flame retardant, a plasticizer, an antistatic agent, a foaming agent, a nucleating agent, etc. and/or thermoplastic resins such as polyethylene terephthalate, polypropylene, polyethylene, etc. may be added in suitable amounts to the PAS, if necessary. These additives are preferably melt-blended with PAS at 280-340°C, preferably 280-320°C using a blending machine such as a single-screw extruder, a double-screw extruder, a Banbury mixer, a kneading roll, a Brabender mixer, a plastgraph, etc. to achieve good dispersion.

[2] Production of melt-blown, non-woven fabric

A preferable apparatus for forming a melt-blown, non-woven fabric of the present invention is shown in Fig. 2. The apparatus for forming the melt-blown, non-woven fabric comprises an extruder 21, a hopper 23 for supplying the PAS to the extruder 21, a die 22 mounted to the extruder 21 at a downstream end thereof, a gas-supplying means (only one gas supplying means 25 is depicted in Fig. 2 for simplicity) connected to the die 22 through hot gas-conveying pipes 24, 24, gas heaters (only one gas heater 26 is depicted in Fig. 2 for simplicity), and a collector roll 27 positioned by a predetermined distance away from a tip end of the die 22.

Fig. 3 shows a cross-section of the die 22. The die 22 is constituted by an upper die plate 41, a lower die plate 42, an upper gas plate 43 and a lower gas plate 44. These parts are assembled to form nozzles 30, gas-blowing slits 31, 32, and upper and lower gas chambers 45, 46 communicating with the slits 31, 32. Each nozzle 30 is constituted by an upstream portion connected to an opening 47 for introducing PAS, a middle portion for forming a resin chamber 48, and a downstream portion having an orifice through which the PAS is extruded. The hot gas-conveying pipes 24, 24 are connected to the upper gas chamber 45 and the lower gas chamber 46, respectively. Heaters 33, 34 for maintaining the nozzles 30 at a predetermined temperature are embedded in the upper die plate 41 and the lower die plate 42, respectively.

In the apparatus having such a structure for forming a melt-blown, non-woven fabric, the PAS is supplied to the extruder 21 through the hopper 23, melt-kneaded, charged into the resin chamber 48 of the die 22 through the opening 47 under pressure, and extruded through the nozzles 30. The molten PAS extruded through the nozzles 30 is drawn by a hot gas blown at a high velocity through the slits 31, 32 to form extremely fine fibers 28, which are then deposited to a predetermined thickness on a collecting surface such as a rotating collector roll 27, thereby forming a non-woven fabric 29.

In the production method of the present invention, the PAS is preferably melt-blown at a temperature about 15-75°C higher than the melting point of the PAS. Specifically, the melt-blowing temperature is preferably 300-360°C. When the melt-blowing temperature is lower than 300°C close to the melting point of PAS, the PAS may remain partially not molten. As a result, the PAS is provided with a non-uniform melt viscosity that is often too high to form the extremely fine fibers, thereby forming thick and/or non-uniform fibers. On the other hand, when the melt-blowing temperature exceeds 360°C, the viscosity of the molten PAS is rather increased by excess oxidative degradation or cross-linking in the die 22, particularly in the residence region of the die 22. As a result, the melt-blowing cannot be carried out stably, failing to produce uniform PAS fibers having an average fiber diameter of 10 μm or less.

With respect to the die 22, an inner diameter of each nozzle 30 is preferably 0.1-1.0 mm, particularly 0.2-0.8 mm. The nozzles 30 are maintained preferably at a temperature of 300-360°C. When the temperature of the nozzles is lower than 300°C, the PAS is rapidly solidified immediately after extrusion through the nozzles 30, whereby the PAS is too insufficiently drawn (crystallized) to provide the resultant non-woven fabric with a high heat resistance (heat shrinkability). On the other hand, when the temperature of the nozzles exceeds 360°C, the monofilaments of PAS are too much fused together to provide fibers with uniform diameters.

The extrusion speed of the PAS through the nozzles 30 is preferably 0.1-1.5 g/minute, particularly 0.2-1.0 g/minute.

The temperature of the hot gas blown through the slits 31, 32 is preferably 300-360°C. When the temperature of the hot gas is lower than 300°C, the PAS is rapidly solidified immediately after extrusion through the nozzles 30, whereby the PAS is too insufficiently drawn (crystallized) to provide the resultant non-woven fabric with a high heat resistance (heat shrinkability). On the other hand, when the temperature of the hot gas exceeds 360°C, the monofilaments of PAS are too much fused together to provide fibers with uniform diameters.

The blowing rate of the hot gas stream through the slits 31, 32 for drawing 1kg/hr of PAS is preferably 30-100 $Nm^3$/hr, particularly 40-70 $Nm^3$/hr. A lower blowing rate of the hot gas would not enable the resultant fibers to have high tensile strength. The preferred blowing pressure of the hot gas is 0.2-1.0 kgf/$cm^2$G.

To stably extrude PAS, an inert gas such as a nitrogen gas, etc. is preferably introduced into the hopper 23 to prevent oxygen from entering, thereby preventing the PAS from suffering increase in melt viscosity due to excessive oxidative cross-linking in the melt extrusion process.

The extremely fine PAS fibers thus formed are continuously collected on the collector roll 27 while entangling with each other. The distance between the die 22 and the collector roll 27 is preferably 5-100 cm, particularly 20-50 cm. When the distance exceeds 100 cm, the fiber flow is disturbed and the fibers are completely solidified before deposition, failing to obtain non-woven fabrics in which the fibers are sufficiently fused and entangled with each other. On the other hand, when the distance is less than 5 cm, the fibers are excessively fused with each other.

The melt-blown, non-woven fabrics thus formed may further be subjected to such treatments as heat setting with a heating roll, calendering, annealing, infrared irradiation, induction heating, etc.

[3] Properties of melt-blown, non-woven fabric

The melt-blown, non-woven PAS fabric of the present invention has (1) an average fiber diameter of 10 μm or less, preferably 0.1-10 μm; and (2) a basis weight of 5-500 g/$m^2$, preferably 10-300 g/$m^2$, particularly 20-100 g/$m^2$. When the average fiber diameter is less than 0.1 μm, the fibers are less likely to be deposited orderly on the collector in the melt-blowing step, whereby the melt-blown fibers are cut to short length and scattered as flies, failing to form non-woven fabrics having uniform structures.

The present invention will be described in detail below referring to the following examples, without intention of restricting the scope of the present invention defined by the claims attached hereto.

SYNTHESIS EXAMPLE 1

Synthesis of polyarylene sulfide (PAS-1)

45.0 kg of *N*-methyl-2-pyrrolidone and 15.4 kg of flaky sodium sulfide ($Na_2S$ content: 60.81 weight %, 120.0 mol) were charged into an autoclave (capacity: 150 L) equipped with a magnetic stirrer and heated to 209°C in a nitrogen atmosphere, with 3.81 kg of the resultant distillate removed. After the autoclave was shut and cooled down to 180°C, 17.70 kg (120.4 mol) of *p*-dichlorobenzene (*p*-DCB, mole ratio of $Na_2S$/*p*-DCB = 0.980) and 32.42 g (0.179 mole, 0.15 mol % per sodium sulfide) of 1,3,5-trichlorobenzene were added to the reaction mixture. The mixture was then subjected to a polymerization reaction while stirring for two hours at 250°C.

When the reaction mixture was cooled down to 180°C after the completion of the polymerization reaction, the resultant polymer slurry was filtered, flashed under a reduced pressure to remove *N*-methyl-2-pyrrolidone and then washed seven times with 120 L of warm water. The resultant solid component was dried at 120°C for 12 hours to obtain a branched polyarylene sulfide (PAS-1).

SYNTHESIS EXAMPLE 2

Synthesis of polyarylene sulfide (PAS-2)

SYNTHESIS EXAMPLE 1 was repeated except for changing the amount of *p*-DCB to 17.52 kg (119.2 mol, molar ratio of $Na_2S$/*p*-DCB = 0.990) and the amount of 1,3,5-trichlorobenzene to 16.21 g (0.089 mol, 0.074 mol % per sodium sulfide), to obtain a branched polyarylene sulfide (PAS-2).

COMPARATIVE SYNTHESIS EXAMPLE 1

Synthesis of polyarylene sulfide (PAS-3)

SYNTHESIS EXAMPLE 1 was repeated except for changing the amount of *p*-DCB to 17.35 kg (118.0 mol, molar ratio of $Na_2S$/*p*-DCB = 1.000) without 1,3,5-trichlorobenzene, to obtain a linear polyarylene sulfide (PAS-3).

COMPARATIVE SYNTHESIS EXAMPLE 2

Synthesis of polyarylene sulfide (PAS-4)

COMPARATIVE SYNTHESIS EXAMPLE 1 was repeated except for changing the amount of *p*-DCB to 18.07 kg (122.9 mol, molar ratio of $Na_2S$/*p*-DCB = 0.960), to obtain a linear polyarylene sulfide (PAS-4).

SYNTHESIS EXAMPLE 3

Synthesis of polyarylene sulfide (PAS-5)

10 kg of the polyarylene sulfide (PAS-3) obtained in COMPARATIVE SYNTHESIS EXAMPLE 1 was charged into an oven with internal air circulation and subjected to a thermal oxidation cross-linking treatment at 230°C for 4 hours, to obtain a polyarylene sulfide (PAS-5).

SYNTHESIS EXAMPLE 4

Synthesis of polyarylene sulfide (PAS-6)

10 kg of the polyarylene sulfide (PAS-4) obtained in COMPARATIVE SYNTHESIS EXAMPLE 2 was charged into an oven with internal air circulation and subjected to a thermal oxidation cross-linking treatment at 230°C for 100 hours, to obtain a polyarylene sulfide (PAS-6).

COMPARATIVE SYNTHESIS EXAMPLE 3

Synthesis of polyarylene sulfide (PAS-7)

10 kg of the polyarylene sulfide (PAS-4) obtained in COMPARATIVE SYNTHESIS EXAMPLE 2 was charged into an oven with internal air circulation and subjected to a thermal oxidation cross-linking treatment at 230°C for 150 hours, to obtain a polyarylene sulfide (PAS-7).
The non-Newtonian coefficient (N) and the melt viscosity ($V_6$) of each polymer PAS-1 to PAS-7 were measured by methods described below. The measurement results are shown in Table 1.

EXAMPLE 1

The polyarylene sulfide (PAS-1) obtained in SYNTHESIS EXAMPLE 1 was charged into a double-screw extruder of an apparatus for forming a melt-blown, non-woven fabric shown in Fig. 1, melt-kneaded and conveyed to a die having 300 nozzles each having an inner diameter of 0.4 mm linearly arranged at an interval of 0.8 mm and heated at 330°C. The PAS-1 was extruded into a high-velocity air stream (350°C, 1.0 kgf/$cm^2$G) at an extrusion rate of the 0.5 g/minute per a nozzle and at a volume ratio of high-velocity air/PAS-1 = 50/1, to give extremely fine polyarylene sulfide fibers. A collector roll placed 50 cm away from the die was rotated at such a velocity as to provide a non-woven fabric having a basis weight of 50 g/$m^2$. The resultant extremely fine fibers were continuously collected and formed into a melt-blown, non-woven fabric.
The melt-blown, non-woven fabric thus obtained was measured with respect to an average fiber diameter by the following method and evaluated with respect to melt-blowing stability by the following criteria. The results are shown in Table 1.

(1) Non-Newtonian coefficient (N)

A shear rate and a shear stress of the PAS were measured at 300°C under the conditions of L/D = 40, wherein L and D represent the length and diameter of the double-screw extruder, respectively, using a capillograph (IB type, manufactured by Toyo Seiki Seisakusho Co., Ltd.) to calculate a non-Newtonian coefficient (N) of the PAS by the following equation (1):

$$\ln (SR) = \ln (K) + N \cdot \ln (SS) \quad (1),$$

wherein SR represents a shear rate [1/s], SS represents a shear stress [dyn/$cm^2$], and K is a constant.

(2) Melt viscosity ($V_6$)

The melt viscosity of the PAS was measured using a flow tester (CFT-500C, manufactured by Shimadzu Corporation) after the PAS was kept at 300°C and a load of 20 kgf/$cm^2$ for 6 minutes under the conditions of L/D=10.

(3) Average fiber diameter

Each non-woven fabric test piece was photographed in 10 arbitrarily selected portions at a magnification of 2,000 by an electron microscope. 10 fibers in each electron photomicrograph, 100 fibers in total, were measured with respect to their diameters to calculate an average diameter.

(4) Melt-blowing stability

The melt-blowing stability was evaluated by the naked eye according to the following criteria:

Good: Melt-blown, non-woven fabric having a uniform basis weight was formed without clogging the nozzles.
Poor: Melt-blown, non-woven fabric having a non-uniform basis weight was formed with the nozzles often clogged.

EXAMPLES 2-4

EXAMPLE 1 was repeated except for using the PAS-2, 5 and 6 obtained in SYNTHESIS EXAMPLES 2-4, respectively instead of the PAS-1 to produce melt-blown, non-woven fabrics. An average diameter of the PAS fibers in the resultant non-woven fabrics was measured, and the melt-blowing stability was evaluated. The results are shown in Table 1.

COMPARATIVE EXAMPLES 1-3

EXAMPLE 1 was repeated except for using the PAS-3, 4 and 7 obtained in COMPARATIVE SYNTHESIS EXAMPLES 1-3, respectively, instead of the PAS-1 to produce melt-blown, non-woven fabrics. An average diameter of the PAS fibers in the resultant non-woven fabrics was measured, and the melt-blowing stability was evaluated. The results are shown in Table 1.

Table 1.

| No. | Resin | Melt Viscosity $V_6$ (poise) | Non-Newtonian Coefficient N | Average Fiber Diameter (μm) | Melt-Blowing Stability |
|---|---|---|---|---|---|
| Example 1 | PAS-1 | 300 | 1.13 | 7.5 | Good |
| Example 2 | PAS-2 | 295 | 1.09 | 8.1 | Good |
| Example 3 | PAS-5 | 400 | 1.19 | 9.5 | Good |
| Example 4 | PAS-6 | 320 | 1.06 | 5.7 | Good |
| Comp. Ex. 1 | PAS-3 | 310 | 1.02 | 15.0 | Poor |
| Comp. Ex. 2 | PAS-4 | 80 | 1.00 | 13.1 | Poor |
| Comp. Ex. 3 | PAS-7 | 450 | 1.22 | 17.3 | Poor |

As is clear from Table 1, the melt-blown, non-woven fabrics of EXAMPLES 1-4 made of branched or cross-linked polyarylene sulfide are constituted by extremely fine fibers produced with good melt-blowing stability. On the contrary, the melt-blown, non-woven fabrics of Comparative Examples 1 and 2 made of the linear polyarylene sulfides are constituted by relatively thick fibers produced with poor melt-blowing stability. Also, the melt-blown, non-woven fabric of COMPARATIVE EXAMPLE 3 made of the excessively cross-linked polyarylene sulfide are constituted by relatively thick fibers produced with poor melt-blowing stability.

As described above in detail, because the melt-blown, non-woven fabrics of the present invention are produced from branched and/or cross-linked polyarylene sulfides having a non-Newtonian coefficient of 1.05-1.20, they are constituted by extremely fine fibers and can be produced with remarkable stability. Such melt-blown, non-woven fabrics are useful for battery separators, liquid filters, gas filters, etc.

## Claims

1. A melt-blown, non-woven fabric produced from a composition comprising polyarylene sulfide having a branched structure and a non-Newtonian coefficient of 1.05-1.20.

2. A melt-blown, non-woven fabric as claimed in claim 1, wherein said polyarylene sulfide is cross-linked.

3. A melt-blown, non-woven fabric as claimed in claim 1 or claim 2, wherein the fibers constituting said melt-blown, non-woven fabric have an average fiber diameter of 10 μm or less.

4. A melt-blown, non-woven fabric as claimed in any one of the preceding claims, wherein said polyarylene sulfide is a reaction product of an alkaline metal sulfide, a dihaloaromatic compound and a polyhaloaromatic compound having 3 or more halogen substituents in one molecule, wherein 0.01-0.3 mol %, based on 100 mol % of said alkaline metal sulfide, of said polyhaloaromatic compound is added in the reaction.

5. A melt-blown, non-woven fabric as claimed in claim 2, wherein said polyarylene sulfide is subjected to a thermal

oxidation cross-linking treatment.

**6.** A melt-blown, non-woven fabric as claimed in claim 5, wherein said thermal oxidation cross-linking treatment is carried out at 160-260°C for 1-120 hours.

**7.** A method for producing a melt-blown, non-woven fabric from fibers comprising polyarylene sulfide, comprising the steps of:

(a) melt-kneading, a composition comprising polyarylene sulfide having a non-Newtonian coefficient of 1.05-1.20;
(b) extruding the melt-kneaded composition through nozzles at 300-360°C and drawing the resultant extrudate with a hot gas stream at 300-360°C to form extremely fine fibers having an average fiber diameter of 10 μm or less; and
(c) depositing said extremely fine fibers on a collector, wherein said polyarylene sulfide is synthesized by a reaction of an alkaline metal sulfide, a dihaloaromatic compound and a polyhaloaromatic compound having 3 or more halogen substituents in one molecule, and wherein 0.01-0.3 mol %, based on 100 mol % of said alkaline metal sulfide, of said polyhaloaromatic compound is added in said reaction.

**8.** A method for producing a melt-blown, non-woven fabric as claimed in claim 7, wherein said polyarylene sulfide is subjected to a thermal oxidation cross-linking treatment before melt-kneading.

**9.** A method for producing a melt-blown, non-woven fabric as claimed in claim 8, wherein said thermal oxidation cross-linking treatment is carried out at 160-260°C for 1-120 hours.

**10.** A melt-blown, non-woven fabric as claimed in claim 1 and claim 2, wherein said polyarylene sulfide is a homopolymer or a copolymer mainly composed of an arylene sulfide repeating unit represented by the following general formula:

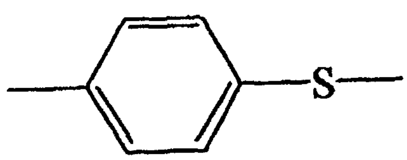
,

said arylene sulfide repeating unit being 70 mol % or more, based on all the repeating units in said PAS, and said arylene sulfide repeating unit being substituted in a range within 30 mol % by at least one repeating unit selected from the group consisting of those represented by the following formulae (i)-(v):

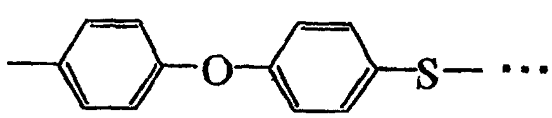
(i) ,

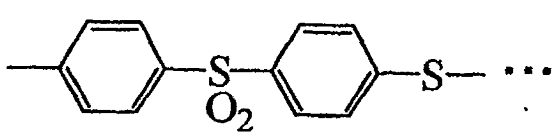
(ii) ,

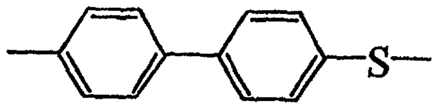 ··· (iii),

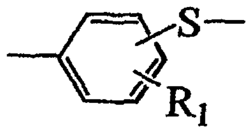 ··· (iv),

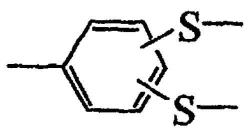 ··· (v)

wherein $R_1$ represents an alkyl group, a nitro group, a phenyl group or an alkoxyl group.

## Patentansprüche

1. Schmelzgeblasenes Vlies, hergestellt aus einer Zusammensetzung, die ein Polyarylensulfid mit verzweigter Struktur und einem nicht-newtonschen Koeffizienten von 1,05 bis 1,20 umfasst.

2. Schmelzgeblasenes Vlies nach Anspruch 1, wobei das Polyarylensulfid vernetzt ist.

3. Schmelzgeblasenes Vlies nach Anspruch 1 oder 2, wobei die das schmelzgeblasene Vlies aufbauenden Fasern einen durchschnittlichen Faserdurchmesser von 10 µm oder weniger aufweisen.

4. Schmelzgeblasenes Vlies nach einem der vorhergehenden Ansprüche, wobei das Polyarylensulfid das Produkt der Umsetzung eines Alkalimetallsulfids, eines Dihalogenaromaten und eines Polyhalogenaromaten mit 3 oder mehr Halogensubstituenten in einem Molekül ist, wobei man 0,01-0,3 mol-%, bezogen auf 100 mol-% Alkalimetallsulfid, Polyhalogenaromat zur Umsetzung gibt.

5. Schmelzgeblasenes Vlies nach Anspruch 2, wobei man das Polyarylensulfid einer thermisch-oxidativen Vernetzungsbehandlung unterwirft.

6. Schmelzgeblasenes Vlies nach Anspruch 5, wobei die thermisch-oxidative Vernetzungsbehandlung bei 160 bis 260 °C über 1 bis 120 Stunden erfolgt.

7. Verfahren zur Herstellung eines schmelzgeblasenen Vlieses aus Polyarylensulfid umfassenden Fasern, bei dem man:

   (a) eine Zusammensetzung schmelzknetet, die Polyarylensulfid mit einem nicht-newtonschen Koeffizienten von 1,05 bis 1,20 umfasst;
   (b) die schmelzgeknetete Zusammensetzung bei 300 bis 360 °C durch Düsen extrudiert und das erhaltene Extrudat mit einem heißen Gasstrom bei 300 bis 360 °C zu sehr dünnen Fasern mit einem durchschnittlichen Faserdurchmesser von 10 µm oder weniger auszieht; und
   (c) die sehr dünnen Fasern auf einem Sammler ablegt, wobei das Polyarylensulfid durch Umsetzung eines Alkalimetallsulfids, eines Dihalogenaromaten und eines Polyhalogenaromaten mit 3 oder mehr Halogensubstituenten in einem Molekül synthetisiert ist, wobei man 0,01-0,3 mol-%, bezogen auf 100 mol-% Alkalimetallsulfid, Polyhalogenaromat zur Umsetzung gibt.

**8.** Verfahren zur Herstellung eines schmelzgeblasenen Vlieses nach Anspruch 7, wobei man das Polyarylensulfid vor dem Schmelzkneten einer thermisch-oxidativen Vernetzungsbehandlung unterwirft.

**9.** Verfahren zur Herstellung eines schmelzgeblasenen Vlieses nach Anspruch 8, wobei die thermisch-oxidative Vernetzungsbehandlung bei 160 bis 260 °C über 1 bis 120 Stunden erfolgt.

**10.** Schmelzgeblasenes Vlies nach Anspruch 1 oder 2, wobei es sich bei dem Polyarylensulfid um ein Homo- oder Copolymer handelt, das überwiegend aufgebaut ist aus Arylensulfidwiederholungseinheiten der folgenden allgemeinen Formel:

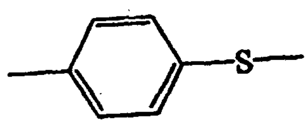

,

und diese Arylensulfidwiederholungseinheit 70 mol-% oder mehr, bezogen auf alle Wiederholungseinheiten in dem PAS, ausmacht und die Arylensulfidwiederholungseinheit im Bereich von bis zu 30 mol-% durch wenigstens eine Wiederholungseinheit substituiert ist, die ausgewählt ist unter denen der folgenden allgemeinen Formeln (i) - (v):

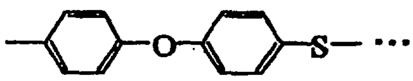

··· (i),

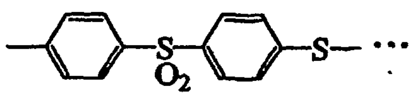

··· (ii),

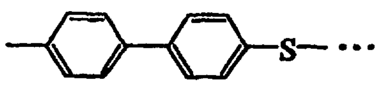

··· (iii),

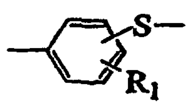

··· (iv),

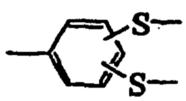

··· (v)

worin $R_1$ für eine Alkylgruppe, eine Nitrogruppe, eine Phenylgruppe oder eine Alkoxylgruppe steht.

## Revendications

1. Tissu non-tissé soufflé à l'état fondu, produit à partir d'une composition comprenant un poly(sulfure d'arylène) ayant une structure ramifiée et un coefficient non-newtonien de 1,05 à 1,20.

2. Tissu non-tissé soufflé à l'état fondu selon la revendication 1, dans lequel ledit poly(sulfure d'arylène) est réticulé.

3. Tissu non-tissé soufflé à l'état fondu selon la revendication 1 ou la revendication 2, dans lequel les fibres constituant ledit tissu non-tissé soufflé à l'état fondu ont un diamètre de fibre moyen de 10 µm ou moins.

4. Tissu non-tissé soufflé à l'état fondu selon l'une quelconque des revendications précédentes, dans lequel ledit poly(sulfure d'arylène) est un produit réactionnel d'un sulfure de métal alcalin, un composé dihalogéno-aromatique et un composé polyhalogéno-aromatique ayant 3 substituants halogène ou plus sur une seule molécule, où on ajoute dans la réaction 0,01 à 0,3 % en moles, pour 100 % en moles dudit sulfure de métal alcalin, dudit composé polyhalogéno-aromatique.

5. Tissu non-tissé soufflé à l'état fondu selon la revendication 2, dans lequel ledit poly(sulfure d'aryléne) est soumis à un traitement de réticulation par oxydation thermique.

6. Tissu non-tissé soufflé à l'état fondu selon la revendication 5, dans lequel ledit traitement de réticulation par oxydation thermique est mis en oeuvre à 160-260°C pendant 1 à 120 heures.

7. Procédé pour produire un tissu non-tissé soufflé à l'état fondu à partir de fibres comprenant du poly(sulfure d'aryléne), comprenant les étapes consistant à :

   (a) malaxer à l'état fondu une composition comprenant du poly(sulfure d'arylène) ayant un coefficient non-newtonien de 1,05 à 1,20 ;
   (b) extruder la composition malaxée à l'état fondu à travers des buses à 300-360°C et étirer l'extrudat résultant avec un courant de gaz chaud à 300-360°C pour former des fibres extrêmement fines ayant un diamètre de fibre moyen de 10 µm ou moins ; et
   (c) déposer lesdites fibres extrêmement fines sur un collecteur, où ledit poly(sulfure d'aryléne) est synthétisé par une réaction d'un sulfure de métal alcalin, d'un composé dihalogéno-aromatique et d'un composé polyhalogéno-aromatique ayant 3 substituants halogène ou plus sur une seule molécule, et où on ajoute dans ladite réaction 0,01 à 0,3 % en moles, pour 100 % en moles dudit sulfure de métal alcalin, dudit composé polyhalogéno-aromatique.

8. Procédé pour produire un tissu non-tissé soufflé à l'état fondu selon la revendication 7, dans lequel ledit poly (sulfuré d'arylène) est soumis à un traitement de réticulation par oxydation thermique avant malaxage à l'état fondu.

9. Procédé pour produire un tissu non-tissé soufflé à l'état fondu selon la revendication 8, dans lequel ledit traitement de réticulation par oxydation thermique est mis en oeuvre à 160-260°C pendant 1 à 120 heures.

10. Tissu non-tissé soufflé à l'état fondu selon la revendication 1 et la revendication 2, dans lequel ledit poly(sulfure d'arylène) est un homopolymère ou un copolymère principalement composé d'un motif répétitif sulfure d'arylène représenté par la formule générale suivante :

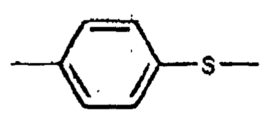

ledit motif répétitif sulfure d'arylène étant présent à raison de 70 % en moles ou plus, sur la base de tous les motifs répétitifs dans ledit PAS, et ledit motif répétitif sulfure d'arylène étant substitué à raison de l'ordre de 30 % en moles par au moins un motif répétitif choisi dans l'ensemble constitué par ceux représentés par les formules (i) à (v) suivantes :

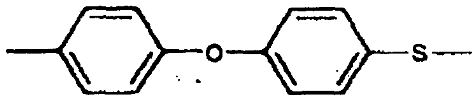

... (i)

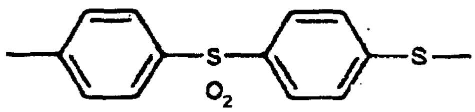

... (ii)

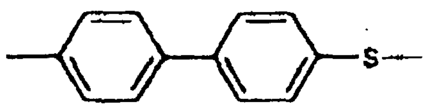

... (iii)

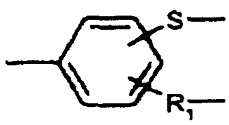

... (iv)

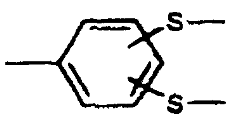

... (v)

où $R_1$ représente un groupe alkyle, un groupe nitro, un groupe phényle ou un groupe alcoxy.

Fig. 1

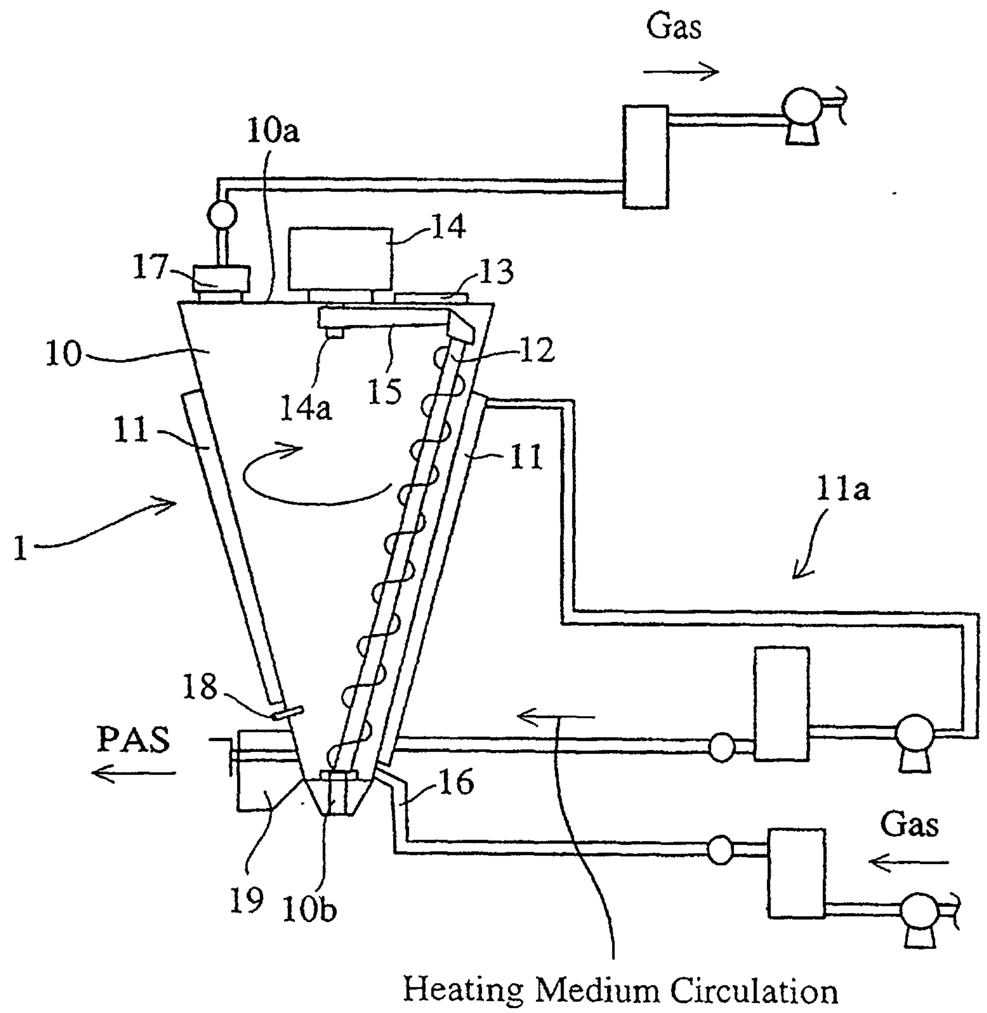
Gas
10a
14
17
13
10
12
14a
15
11
11
11a
1
18
PAS
16
Gas
19
10b
Heating Medium Circulation

Fig. 2

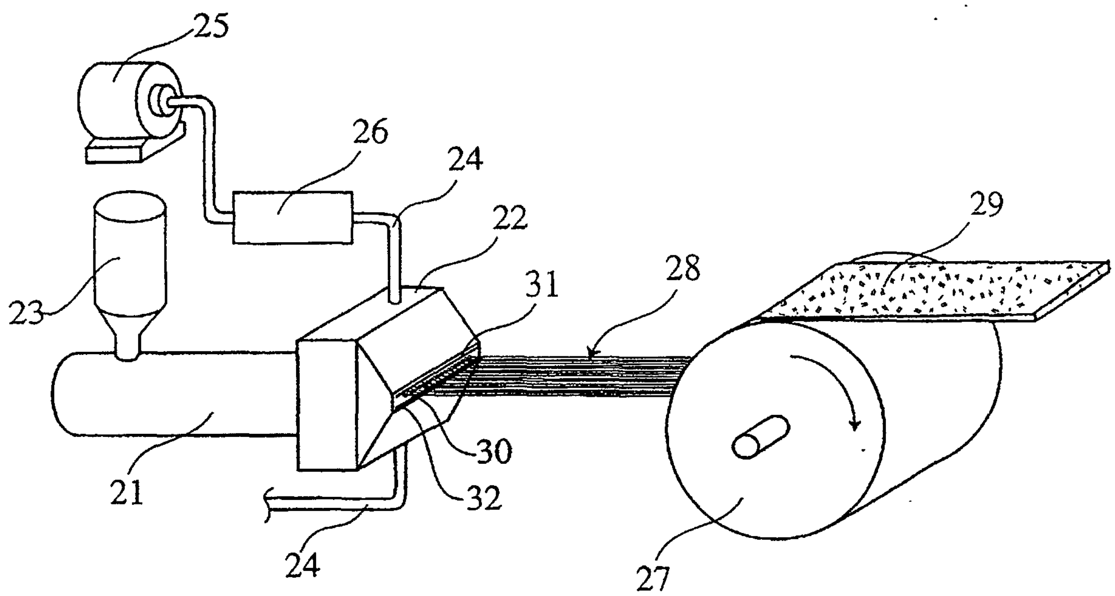
25
26
24
22
29
23
31
28
30
21
32
24
27

Fig. 3

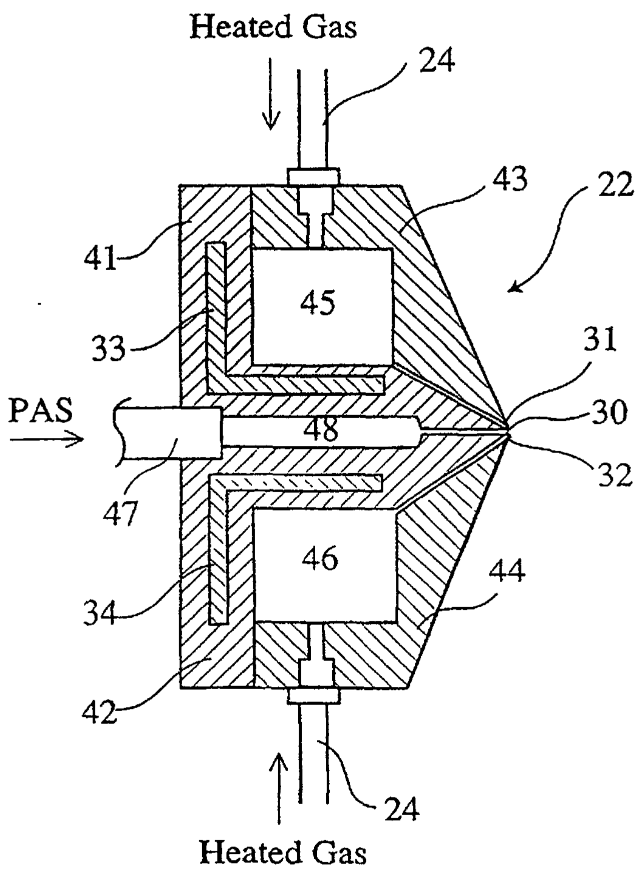
Heated Gas
24
43
22
41
45
33
31
PAS
48
30
32
47
46
34
44
42
24
Heated Gas